(19) Europäisches Patentamt
European Patent Office
Office européen des brevets

(11) **EP 4 723 422 A1**

(12) **EUROPEAN PATENT APPLICATION**
published in accordance with Art. 153(4) EPC

(43) Date of publication:
**08.04.2026 Bulletin 2026/15**

(21) Application number: **24814934.6**

(22) Date of filing: **18.03.2024**

(51) International Patent Classification (IPC):
*H02J 3/38* (2026.01)   *H02J 3/00* (2026.01)
*H02J 7/00* (2026.01)   *H02J 7/35* (2006.01)

(52) Cooperative Patent Classification (CPC):
**G06Q 50/06; G06Q 50/40; H02J 3/00; H02J 3/38;
H02J 7/00; H02J 7/35**

(86) International application number:
**PCT/JP2024/010561**

(87) International publication number:
**WO 2024/247447 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023 JP 2023087316**

(71) Applicant: **Hitachi, Ltd.
Tokyo 100-8280 (JP)**

(72) Inventors:
• **NAKANO Michiki
Tokyo 100-8280 (JP)**
• **KUMAGAI Masatoshi
Tokyo 100-8280 (JP)**
• **FUJIWARA Shuuhei
Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **POWER INTERCHANGE MANAGEMENT SYSTEM AND POWER INTERCHANGE MANAGEMENT METHOD**

(57) An amount of surplus power self-consumed by an operator is increased. The power interchange management system (1) includes: an EV dispatch and charging planning system (42) configured to manage a charging device (43) for an electric vehicle and a private power generation device and plan charging and dispatch for the electric vehicle; an EV dispatch and charging planning system (46) configured to manage a charging device (43) for an electric vehicle and plan charging and dispatch for the electric vehicle; and an interchange planning unit (21) configured to aggregate surplus power from the EV dispatch and charging planning system (42) to obtain interchangeable power and provide the interchangeable power to the EV dispatch and charging planning system (46) according to a predetermined priority order.

[FIG. 1]

# Description

Technical Field

The present invention relates to a power interchange management system and a power interchange management method.

Background Art

In recent years, major logistics companies promote an introduction of renewable energy (PV: photovoltaic power generation) utilizing a large roof of their own warehouse. The major logistics companies also consider utilizing a self-consignment system in which power is interchanged to another site in their own company. At the same time, conversion of a last one-rail truck to an electric vehicle (EV) is also promoted, and an internal combustion engine truck and the EV truck are operated in a mixed manner.

PTL 1 describes a power transmission control method to be executed by a terminal connected to a communication network. The method includes a process of individually predicting an amount of electricity received from a power system by each consumer who uses a power interchange service, and a process of controlling, according to the predicted amount of electricity, an amount of electricity generated by a private power generation facility of each consumer and transmitted to the power system.

Citation List

Patent Literature

PTL 1: JP7202928B

Summary of Invention

Technical Problem

When a certain site includes a warehouse, surplus power may be generated relative to an installable PV capacity. Therefore, it is conceivable to transmit the surplus power to another site in the same company through a power transmission and distribution network by self-consignment. Accordingly, an amount of power purchased from a power company can be reduced, and a $CO_2$ emission amount can be reduced. Surplus power that cannot be self-consumed at the certain site can be utilized at another site without waste.

When self-consignment is used, a "planned value simultaneous equal amount" system needs to be maintained. In the "planned value simultaneous equal amount", it is necessary to predict a demand amount and a supply amount of electricity in 30-minute intervals and report planned values. The self-consignment must not be for a purpose of selling electricity and require a close relation between a power generation source operator and a supply destination operator.

When self-consignment of photovoltaic power generation is performed, renewable energy can be used even in a demand location where it is difficult to secure a space on a roof or an empty place. However, in the self-consignment, it is necessary to predict a demand amount and a power generation amount of electricity in 30-minute intervals and match actual supply-demand to the planned value so as not to deviate. When a deviation occurs between the planned value and an actual value, a penalty is imposed, so that attention is required.

When the surplus power of the certain site is self-consigned to another site without being integrated with an EV charging plan, the surplus power cannot be utilized to the maximum. In addition, current conversion of a truck to an electric vehicle (EV) can be introduced only in a limited manner due to a charging restriction imposed by contracted power.

Therefore, an object of the invention is to increase an amount of surplus power self-consumed by an operator.

Solution to Problem

In order to solve the above problems, a power interchange management system according to the invention includes: a first EV dispatch and charging planning system configured to manage a charging device for an electric vehicle and a private power generation device at a first site and plan charging and dispatch for the electric vehicle; a second EV dispatch and charging planning system configured to manage a charging device for an electric vehicle at a second site and plan charging and dispatch for the electric vehicle; and an interchange planning unit configured to aggregate surplus power from the first EV dispatch and charging planning system to obtain interchangeable power and provide the interchangeable power to the second EV dispatch and charging planning system according to a predetermined priority order.

A power interchange management method according to the invention includes: a step of planning, by a first EV dispatch and charging planning system that manages a charging device for an electric vehicle and a private power generation device at a first site, charging and dispatch for the electric vehicle; a step of planning, by a second EV dispatch and charging planning system that manages a charging device for an electric vehicle at a second site, charging and dispatch for the electric vehicle; a step of aggregating surplus power from the first EV dispatch and charging planning system to obtain interchangeable power by an interchange planning unit; and a step of providing the interchangeable power to the second EV dispatch and charging planning system according to a predetermined priority order.

Other means will be described in embodiments for carrying out the invention.

Advantageous Effects of Invention

According to the invention, it is possible to increase an amount of surplus power self-consumed by an operator.

Brief Description of Drawings

[FIG. 1] FIG. 1 is an overall configuration diagram of a power interchange management system according to a present embodiment.
[FIG. 2A] FIG. 2A is a configuration diagram of an EV dispatch and charging planning system.
[FIG. 2B] FIG. 2B is a configuration diagram of an EV dispatch and charging planning system.
[FIG. 3] FIG. 3 is a diagram showing an example of a sequence diagram executed by the power interchange management system.
[FIG. 4A] FIG. 4A is a graph of a total of a power demand and a charge amount at a site.
[FIG. 4B] FIG. 4B is a graph of photovoltaic power generation prediction data at the site.
[FIG. 4C] FIG. 4C is a graph of a final purchased power amount and a surplus power amount.
[FIG. 5A] FIG. 5A is a graph of a total of a power demand and a charge amount at a site.
[FIG. 5B] FIG. 5B is a graph of surplus power.
[FIG. 5C] FIG. 5C is a graph of a result obtained by subtracting the surplus power from the total of the power demand and the charge amount at the site.
[FIG. 6] FIG. 6 is a table of the number of EV trucks held at each site.
[FIG. 7] FIG. 7 is a table of a total storage battery capacity of the EV trucks at each site.
[FIG. 8] FIG. 8 is a table of an average total delivery distance at each site.
[FIG. 9] FIG. 9 is a table of ICE average fuel efficiency at each site.
[FIG. 10] FIG. 10 is a table of an average available capacity with respect to contracted power at each site.
[FIG. 11] FIG. 11 is a table of a renewable energy power ratio at each site.
[FIG. 12] FIG. 12 is a table of an average total EV charge amount per day at each site.

Description of Embodiments

Hereinafter, embodiments for carrying out the invention will be described in detail with reference to the drawings.

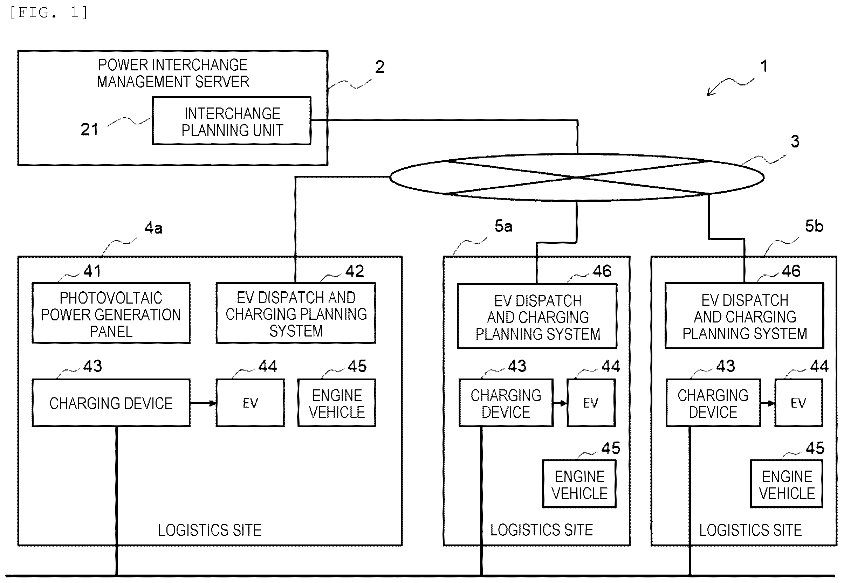

FIG. 1 is an overall configuration diagram of a power interchange management system 1 according to the present embodiment.
The power interchange management system 1 includes an interchange planning server 2, an EV dispatch and charging planning system 42 provided at a site 4a or the like, and EV dispatch and charging planning systems 46 respectively provided at sites 5a and 5b. Here, the site 4a or the like includes a photovoltaic power generation panel 41 that is a private power generation device and a charging device 43 for an EV vehicle 44, and is a first site where surplus power may be generated. Each of the sites 5a, 5b, and the like includes the charging device 43 for the EV vehicle 44 but does not include a private power generation device, and is a second site where no surplus power is generated. Although three sites are illustrated here, there are actually a plurality of first sites respectively including the photovoltaic power generation panels 41 and a plurality of second sites not including the photovoltaic power generation panel 41.
When interchanging the surplus power generated in the site 4a or the like to the other sites 5a, 5b, and the like, the power interchange management system 1 creates an interchange plan integrated with an EV dispatch plan, thereby achieving an effect of increasing an amount of self-consumed surplus power and reducing a $CO_2$ emission amount by extending a cruising distance of the EV vehicle 44. For example, the $CO_2$ emission amount can be reduced by assigning the EV vehicle 44 to a route having a long delivery distance and an engine vehicle 45 to a route having a short delivery distance. The engine vehicle 45 may also be referred to as an internal combustion engine (ICE).
The interchange planning server 2 includes an interchange planning unit 21 that manages a surplus power amount (total amount) at the site 4a or the like into which a renewable energy power generation device such as the photovoltaic power generation panel 41 is introduced. The interchange planning unit 21 calculates and manages an interchange amount of the surplus power amount at the site 4a, which is to be interchanged to the sites 5a, 5b, and the like where no surplus power is generated. The interchange planning unit 21 sets a priority order of the sites 5a, 5b, and the like where no surplus power is generated, and notifies the sites 5a, 5b, and the like of an available surplus power amount according to the priority order.
The EV dispatch and charging planning system 42 predicts a power generation amount of the photovoltaic power generation panel 41 at the first site, and creates a dispatch plan and the EV charging plan for the EV vehicle 44 based on a delivery route condition and the like. Like the site 4a, the engine vehicle 45 and the EV vehicle 44 may be mixed. The EV dispatch and charging planning system 42 creates the dispatch plan indicating which vehicle is to be allocated to which delivery route. When creating the EV charging plan, the EV dispatch and charging planning system 42 creates the charging plan such that a power consumption amount at the site does not exceed contracted power (upper limit value). The EV dispatch and charging planning system 42 functions as a first EV dispatch and charging planning system that manages a charging device for an electric vehicle and a private power generation device and that plans charging and dispatch for the electric vehicle. The private power generation device provided in the site is not limited to a renewable energy power generation device such as the photovoltaic power generation panel 41 or a wind power generation device, and may be any type of power generation device.

The EV dispatch and charging planning system 46 receives the available surplus power amount from the interchange planning server 2, and creates a dispatch plan and an EV charging plan for the EV vehicle 44 based on a delivery route condition at the second site and the like. Like the sites 5a and 5b, the engine vehicle 45 and the EV vehicle 44 may be mixed. The EV dispatch and charging planning system 46 creates the dispatch plan indicating which vehicle is to be allocated to which delivery route. When creating the EV charging plan, the EV dispatch and charging planning system 46 creates the charging plan such that a power consumption amount at the site does not exceed contracted power (upper limit value). The EV dispatch and charging planning system 46 functions as a second EV dispatch and charging planning system that manages a charging device for an electric vehicle at the second site and that plans charging and dispatch for the electric vehicle.

Then, the interchange planning unit 21 aggregates the surplus power from the EV dispatch and charging planning system 42 to obtain interchangeable power, and provides the interchangeable power to the EV dispatch and charging planning systems 46 according to the predetermined priority order.

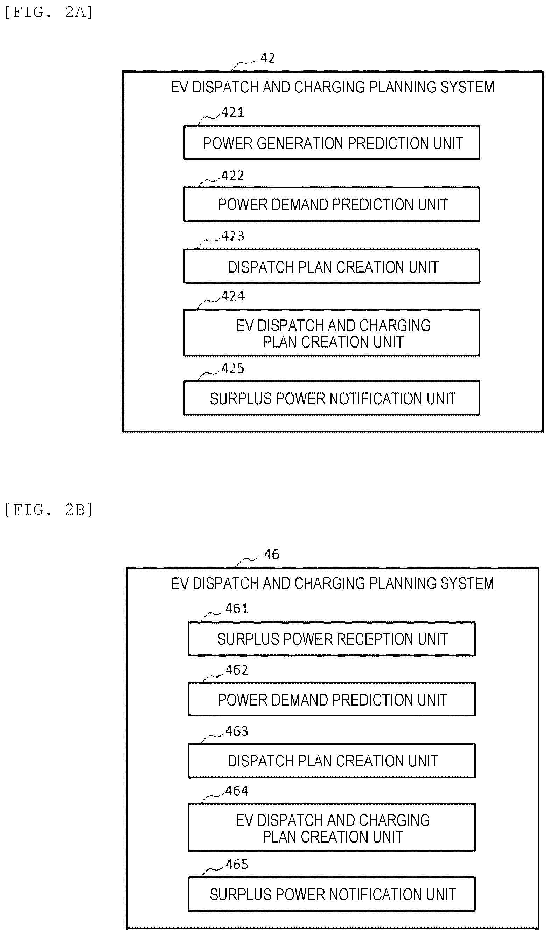

FIG. 2A is a configuration diagram of the EV dispatch and charging planning system 42.

The EV dispatch and charging planning system 42 includes a power generation prediction unit 421, a power demand prediction unit 422, a dispatch plan creation unit 423, an EV dispatch and charging plan creation unit 424, and a surplus power notification unit 425. The power generation prediction unit 421 predicts power generated by the photovoltaic power generation panel 41. The power demand prediction unit 422 predicts a power demand including a charging power for the EV vehicle 44 at this site.

The dispatch plan creation unit 423 creates the dispatch plan indicating which EV vehicle 44 is to be allocated to which delivery route based on information on the delivery route indicating a delivery time and a delivery location. The EV dispatch and charging plan creation unit 424 creates the dispatch plan and the charging plan for the EV vehicle 44 such that delivery information is satisfied. The surplus power notification unit 425 notifies the interchange planning unit 21 of surplus power obtained by subtracting the power demand at this site from the power generated by the photovoltaic power generation panel 41.

FIG. 2B is a configuration diagram of the EV dispatch and charging planning system 46.

The EV dispatch and charging planning system 46 includes a surplus power reception unit 461, a power demand prediction unit 462, a dispatch plan creation unit 463, and a surplus power notification unit 465. The surplus power reception unit 461 receives the surplus power. The power demand prediction unit 462 predicts a power demand including charging power for the EV vehicle 44 at this site.

The dispatch plan creation unit 463 creates the dispatch plan indicating which EV vehicle 44 is to be allocated to which delivery route based on information on the delivery route indicating a delivery time and a delivery location. An EV dispatch and charging plan creation unit 464 creates the dispatch plan and the charging plan for the EV vehicle 44 such that delivery information is satisfied. The surplus power notification unit 465 notifies the interchange planning unit 21 of new surplus power obtained by subtracting the power demand from the surplus power provided from the interchange planning unit 21.

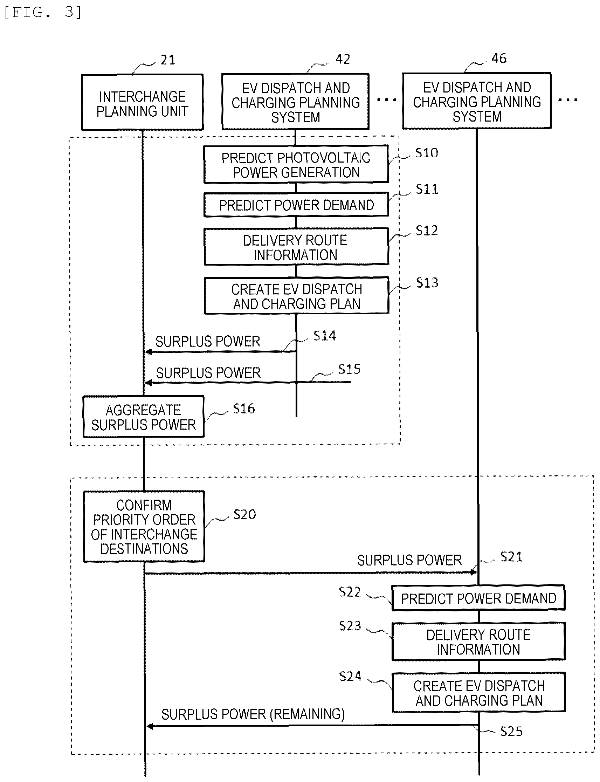

FIG. 3 is a diagram showing an example of a sequence diagram executed by the power interchange management system 1.

The power interchange management system 1 creates plans by periodically executing this processing sequence. The execution interval of this processing sequence is, for example, once every several hours to once a day.

The power generation prediction unit 421 predicts a photovoltaic power generation amount in the future (one day to several days, hourly intervals, or the like) by a machine learning function or the like based on information such as a past power demand history, a season, a day of a week, a time, and weather (step S10).

The power demand prediction unit 422 predicts a site power demand amount in the future (one day to several days, hourly intervals, or the like) by a machine learning function or the like based on information such as a past power demand history, a season, a day of a week, a time, and weather (step S11). A prediction function itself may be achieved by another system, and is not a required component in the present patent.

The dispatch plan creation unit 423 acquires the information on the delivery route indicating the delivery time and the delivery location (step S12). Then, the dispatch plan creation unit 423 creates the dispatch plan indicating which EV vehicle 44 is to be allocated to which delivery route (step S13). As shown in FIG. 1, the engine vehicle 45 and the EV vehicle 44 may be mixed at the site. Even in this case, the dispatch plan creation unit 423 creates a dispatch plan indicating which vehicle is allocated to which delivery route.

Next, the EV dispatch and charging plan creation unit 424 creates the dispatch plan and the charging plan for the EV vehicle 44 such that the delivery information is satisfied. The EV dispatch and charging plan creation unit 424 further creates the charging plan based on constraint of Equation (1).
[Math. 1]

$$(E_d + E_c) - E_p < E_n \cdots \quad (1)$$

Here, $E_d$: power demand at a site
$E_c$: charge amount
$E_p$: photovoltaic power generation amount
$E_n$: contracted power

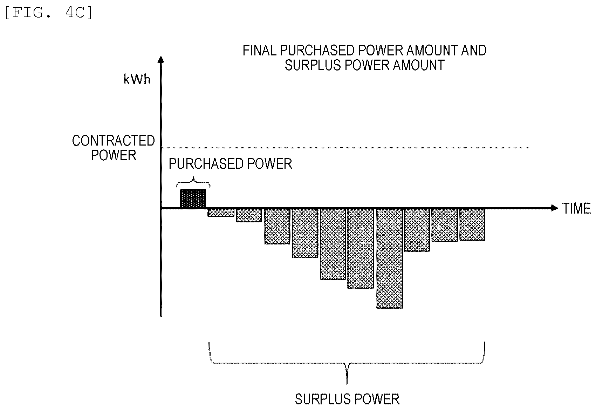

A final purchased power amount and the surplus power amount at the site 4a where the surplus power is generated are shown in FIG. 4C, and are calculated based on Equation (2).
[Math. 2]

$$(E_d + E_c) - E_p = E_0 \cdots \quad (2)$$

Thereafter, the surplus power notification unit 425 notifies the interchange planning unit 21 of the surplus power amount (step S14). The surplus power notification unit 425 at another site also notifies the interchange planning unit 21 of the surplus power amount (step S15).

The interchange planning unit 21 repeats a process of receiving the surplus power amount by the number of sites in each of which a power generation facility performing, for example, photovoltaic power generation or wind power generation is provided and in each of which the surplus power can be generated, and then calculates a total amount of the surplus power (step S16).

The EV dispatch and charging planning system 42 creates an EV truck charging plan such that the purchased power amount does not exceed the contracted power $E_n$. The EV dispatch and charging planning system 42 creates a plan by solving an optimization problem or a constraint satisfaction problem that satisfies a constraint condition in which traveling along the delivery route is satisfied and the purchased power does not exceed the contracted power $E_n$.

The interchange planning unit 21 uses the total surplus power calculated in step S16 at the sites 5a, 5b, and the like where no surplus power is generated. The interchange planning unit 21 confirms a priority order of interchange destinations (Step S20), and notifies each site of a surplus power amount according to the priority order (Step S21).

The power demand prediction unit 462 predicts a site power demand amount in the future (one day to several days, hourly intervals, or the like) by a machine learning function or the like based on information such as a past power demand history, a season, a day of a week, a time, and weather (step S22).

The dispatch plan creation unit 463 acquires the information on the delivery route indicating the delivery time and the delivery location (step S23). Then, the dispatch plan creation unit 463 creates the dispatch plan indicating which EV vehicle 44 is to be allocated to which delivery route.

Next, the EV dispatch and charging plan creation unit 464 creates the dispatch plan and the charging plan for the EV vehicle 44 such that the delivery information is satisfied (step S24). The EV dispatch and charging plan creation unit 464 further creates the charging plan based on the constraint of Equation (1). Then, the surplus power notification unit 465 notifies the interchange planning unit 21 of a remaining surplus power amount (Step S25).

The interchange planning unit 21 repeats a process of providing a new surplus power obtained by subtracting an excess demand of the EV dispatch and charging planning system 46 at site having a certain priority to the EV dispatch and charging planning system 46 at a site having a next priority. The interchange planning unit 21 repeats this process until the creation of the EV dispatch plan and the EV charging plan is completed at all the sites 5a, 5b, and the like where the surplus power is not generated. When the surplus power is small or there is no surplus power, the EV dispatch plan is created without the interchange power at the site where no surplus power is generated.

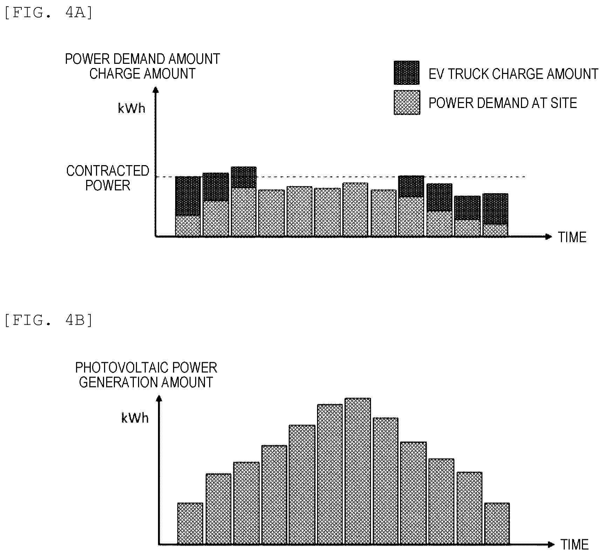

FIG. 4A to FIG. 4C show an outline of creation of the EV dispatch and charging plan at a site where surplus power is generated.

As shown in FIG. 4A, the final purchased power amount or the surplus power amount at the site 4a where the surplus power is generated is calculated by subtracting the photovoltaic power generation amount $E_p$ at the site from a sum of the power demand $E_d$ and the charge amount $E_c$ for the EV vehicle at the site.

In the EV dispatch and charging planning system 42, the EV truck charging plan is created such that the purchased power amount does not exceed the contracted power $E_n$. The EV dispatch and charging planning system 42 creates a plan by solving an optimization problem or a constraint satisfaction problem that satisfies a constraint condition in which the traveling along the delivery route is satisfied and the purchased power does not exceed the contracted power $E_n$.

FIG. 4A is a graph of a total of the power demand and the charge amount at the site. A horizontal axis of the graph represents time. A vertical axis of the graph indicates the total of the power demand $E_d$ and the charge amount $E_c$ at the site.

FIG. 4B is a graph of photovoltaic power generation prediction data at the site. A horizontal axis of the graph represents time. A vertical axis of the graph represents a predicted value of the photovoltaic power generation amount $E_p$.

FIG. 4C is a graph of the final purchased power amount or the surplus power amount. A horizontal axis of the graph represents time. A vertical axis of the graph indicates the final purchased power amount or the surplus power amount. When the vertical axis of the graph is positive, the vertical axis indicates the purchased power amount. When the vertical axis of the graph is negative, the vertical axis indicates the surplus power amount. The final purchased power amount or the surplus power amount is calculated by Equation (2) described above.

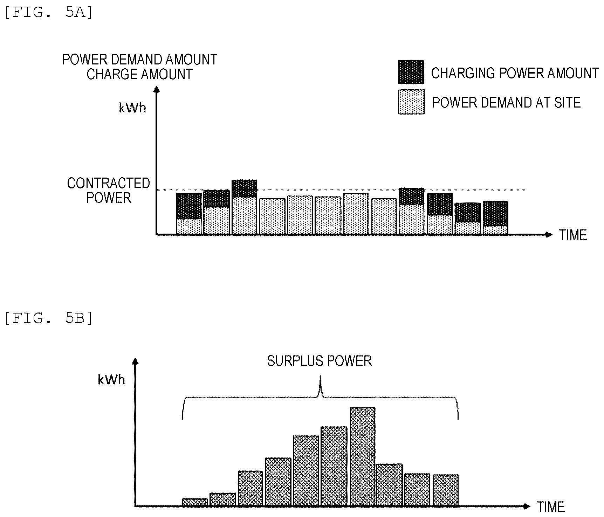

FIG. 5A to FIG. 5C show an outline of creation of the EV dispatch and charging plan at a site where no surplus power is generated.

The final purchased power amount or the surplus power amount at the sites 5a and 5b where no surplus power is generated is expressed by Equation (3).

[Math. 3]

$$(E_d + E_c) - E_0 = E_1 \cdots \quad (3)$$

Here, $E_0$: surplus power amount
$E_1$: new surplus power amount

In the EV dispatch and charging planning system 46, the EV truck charging plan is created such that the purchased power amount does not exceed the contracted power $E_n$. The EV dispatch and charging planning system 46 creates a plan by solving an optimization problem or a constraint satisfaction problem that satisfies a constraint condition in which the traveling along the delivery route is satisfied and the purchased power does not exceed the contracted power.

FIG. 5A is a graph of a total of the power demand and the charge amount at the site. A horizontal axis of the graph represents time. A vertical axis of the graph indicates the total of the power demand $E_d$ and the charge amount $E_c$ at the site.

FIG. 5B is a graph of the surplus power. A horizontal axis of the graph represents time. A vertical axis of the graph represents the surplus power amount $E_0$.

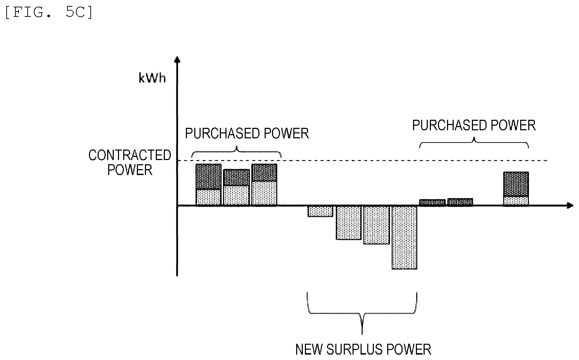

FIG. 5C is a graph of a result obtained by subtracting the surplus power from the total of the power demand and the charge amount at the site. A horizontal axis of the graph represents time. A vertical axis of the graph indicates a result obtained by subtracting the current surplus power amount $E_0$ from the total of the power demand and the charge amount at the site. When the vertical axis of the graph is positive, the vertical axis indicates the purchased power amount. When the vertical axis of the graph is negative, the vertical axis indicates the new surplus power amount $E_1$.

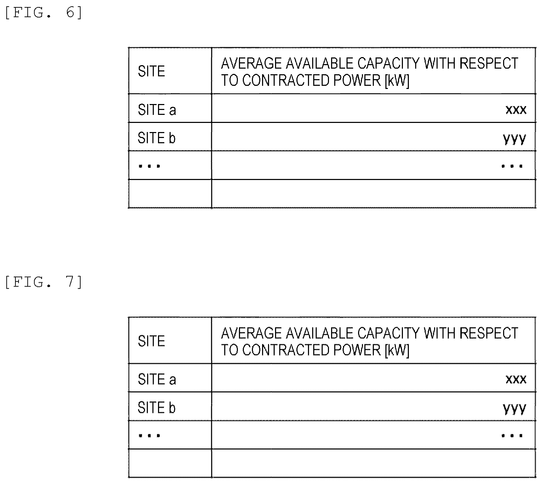

In Step S20, the interchange planning unit 21 determines the priority order of the interchange destinations based on parameters at the sites. Examples of the parameters for determining the priority order are shown in FIGS. 6 to 12.

FIG. 6 is a table of the number of EV trucks held at each site.

The interchange planning unit 21 determines the priority in descending order of the number of the EV vehicles managed by the EV dispatch and charging planning system 46 based on an idea that power consumption increases and power interchange is required as the number of the EV trucks at the site increases.

FIG. 7 is a table of a total storage battery capacity of the EV trucks at each site.

The interchange planning unit 21 determines the priority in descending order of the total storage battery capacity of the EV truck managed by the EV dispatch and charging planning system 46 based on an idea that the power consumption increases and the power interchange is required as the total storage battery capacity of the EV trucks at the site increases.

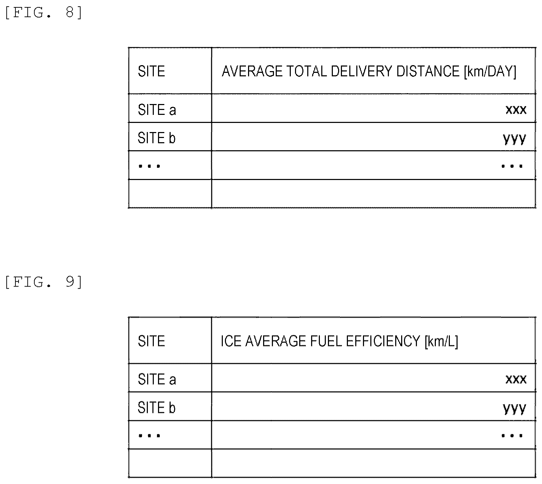

FIG. 8 is a table of an average total delivery distance at each site.

The average total delivery distance at the site refers to an average value of a sum of distances (delivery distances) traveled by the trucks at the site to deliver packages. The interchange planning unit 21 determines the priority in descending order of the average total delivery distance managed by the EV dispatch and charging planning system 46 based on an idea that power consumption of the EV trucks increases and power interchange is required as the average total delivery distance per day at the site increases.

FIG. 9 is a table of ICE average fuel efficiency at each site.

The interchange planning unit 21 determines the priority in ascending order of values of the average fuel efficiency of the engine vehicle managed by the EV dispatch and charging planning system 46 based on an idea that the lower the average fuel efficiency of the ICE (engine vehicle) at the site is, the larger the $CO_2$ emission amount is, which means that the travel performed by the EV truck is required and the power consumption increases.

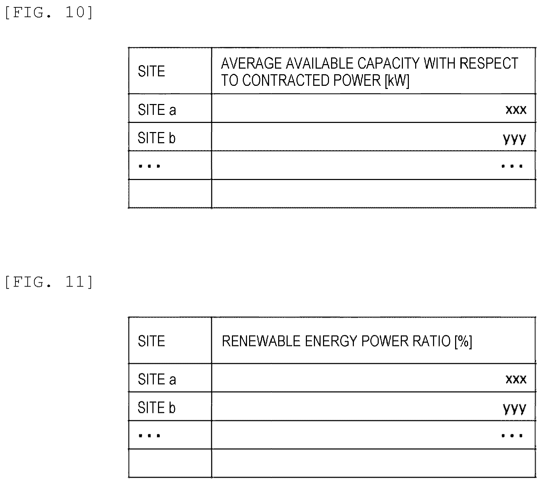

FIG. 10 is a table of an average available capacity with respect to contracted power at each site.

The interchange planning unit 21 determines the priority in ascending order of values of the average available capacity with respect to the contracted power managed by the EV dispatch and charging planning system 46 based on an idea that a risk of exceeding the contracted power is higher and the power interchange is required as the average available capacity with respect to the contracted power at the site is smaller.

FIG. 11 is a table of a renewable energy power ratio at each site.

The interchange planning unit 21 determines the priority in ascending order of values of the renewable energy power ratio at the site managed by the EV dispatch and charging planning system 46 based on an idea that interchange of the renewable energy surplus power is required to reduce the $CO_2$ emission amount as the renewable energy power ratio at the site is smaller. The renewable energy power ratio $R_r$ is calculated by the following Equation (4).

[Math. 4]

$$R_r = {E_b}/{E_a} \cdots \quad (4)$$

Here, $R_r$: renewable energy power ratio
$E_b$: purchased renewable energy power amount
$E_a$: total power consumption amount

The purchased renewable energy power amount refers to a renewable energy power amount purchased from an electricity retailer.

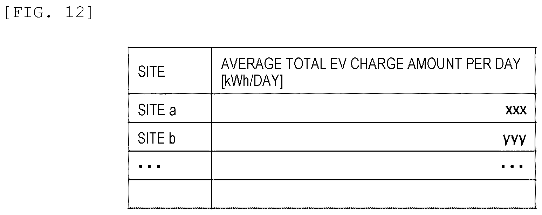

FIG. 12 is a table of an average value of a total EV charge amount per day at each site.

The interchange planning unit 21 determines the priority in descending order of the average values of the average total EV charge amount based on an idea that the power consumption increases as the average value of the total EV charge amount per day at the site increases.

The interchange planning unit 21 may determine the priority order of each EV dispatch and charging planning system 46 based on a $CO_2$ emission factor of a power plan contracted at the second site managed by the EV dispatch and charging planning system 46.

The interchange planning unit 21 may determine the priority based on, not limited to each of the parameters described above, an evaluation value obtained by selecting and weighting any one of the plurality of parameters, and is not limited thereto.

(Modifications)

The invention is not limited to the embodiments described above and includes various modifications. For example, the embodiments described above have been described in detail to facilitate understanding of the invention, and the invention is not necessarily limited to those including all the configurations described above. A part of a configuration according to a certain embodiment can be replaced with a configuration according to another embodiment, and a configuration according to another embodiment can be added to a configuration according to a certain embodiment. A part of a configuration according to each embodiment may be added to, deleted from, or replaced with another configuration.

A part or all of configurations, functions, processing units, processing methods, and the like described above may be implemented by hardware such as an integrated circuit. The configurations, functions, and the like described above may be implemented by software by a processor interpreting and executing a program for implementing each function. Information such as a program, a table, and a file for implementing each function can be stored in a recording device such as a memory, a hard disk, and a solid state drive (SSD) or a recording medium such as a flash memory card and a digital versatile disk (DVD).

Control lines and information lines considered to be necessary for description are shown in each embodiment, and not all control lines and information lines in a product are necessarily shown. Actually, it may be considered that almost all the configurations are connected.

Reference Signs List

1: power interchange management system
2: interchange planning server
21: interchange planning unit
4a: site (first site)
5a, 5b: site (second site)
41: photovoltaic power generation panel
42: EV dispatch and charging planning system (first EV dispatch and charging planning system)
421: power generation prediction unit
422: power demand prediction unit
423: dispatch plan creation unit
424: EV dispatch and charging plan creation unit
425: surplus power notification unit
43: charging device
44: EV vehicle
45: engine vehicle
46: EV dispatch and charging planning system (second EV dispatch and charging planning system)
461: surplus power reception unit
462: power demand prediction unit
463: dispatch plan creation unit
464: EV dispatch and charging plan creation unit
465: surplus power notification unit

**Claims**

1. A power interchange management system comprising:

   a first EV dispatch and charging planning system configured to manage a charging device for an electric vehicle and a private power generation device at a first site and plan charging and dispatch for the electric vehicle;
   a second EV dispatch and charging planning system configured to manage a charging device for an electric vehicle at a second site and plan charging and dispatch for the electric vehicle; and
   an interchange planning unit configured to aggregate surplus power from the first EV dispatch and charging planning system to obtain interchangeable power and provide the interchangeable power to the second EV dispatch and charging planning system according to a predetermined priority order.

2. The power interchange management system according to claim 1, wherein
   the interchange planning unit repeats a process of providing new surplus power obtained by subtracting an excess demand at the second site managed by the second EV dispatch and charging planning system having a certain priority to the second site managed by the second EV dispatch and charging planning system having a next priority.

3. The power interchange management system according to claim 1, wherein
the second EV dispatch and charging planning system includes a surplus power notification unit configured to notify the interchange planning unit of new surplus power obtained by subtracting a power demand from the surplus power provided from the interchange planning unit.

4. The power interchange management system according to claim 1, wherein
the first EV dispatch and charging planning system includes:

a power generation prediction unit configured to predict power generated by the private power generation device;
a power demand prediction unit configured to predict a power demand including charging power for the electric vehicle; and
a surplus power notification unit configured to notify the interchange planning unit of the surplus power obtained by subtracting the power demand from the generated power.

5. The power interchange management system according to claim 3, wherein
the interchange planning unit determines the priority order of the second EV dispatch and charging planning system based on the number of the electric vehicles at the second site managed by the second EV dispatch and charging planning system.

6. The power interchange management system according to claim 3, wherein
the interchange planning unit determines the priority order of the second EV dispatch and charging planning system based on a total storage battery capacity of the electric vehicle at the second site managed by the second EV dispatch and charging planning system.

7. The power interchange management system according to claim 3, wherein
the interchange planning unit determines the priority order of the second EV dispatch and charging planning system based on an average total delivery distance at the second site managed by the second EV dispatch and charging planning system.

8. The power interchange management system according to claim 3, wherein

the interchange planning unit determines the priority order of the second EV dispatch and charging planning system based on an average fuel efficiency of an engine vehicle at the second site managed by the second EV dispatch and charging planning system.

9. The power interchange management system according to claim 3, wherein
the interchange planning unit determines the priority order of the second EV dispatch and charging planning system based on an average available capacity with respect to contracted power at the second site managed by the second EV dispatch and charging planning system.

10. The power interchange management system according to claim 3, wherein
the interchange planning unit determines the priority order of the second EV dispatch and charging planning system based on a renewable energy power ratio at the second site managed by the second EV dispatch and charging planning system.

11. The power interchange management system according to claim 3, wherein
the interchange planning unit determines the priority order of the second EV dispatch and charging planning system based on an average value of a total EV charge amount at the second site managed by the second EV dispatch and charging planning system.

12. The power interchange management system according to claim 3, wherein
the interchange planning unit determines the priority order of the second EV dispatch and charging planning system based on a $CO_2$ emission factor of a power plan contracted at the second site managed by the second EV dispatch and charging planning system.

13. The power interchange management system according to claim 3, wherein
the interchange planning unit determines the priority order of the second EV dispatch and charging planning system by selecting and weighting any one or more of the number of the electric vehicles at the second site managed by the second EV dispatch and charging planning system, a total storage battery capacity of the electric vehicle at the second site managed by the second EV dispatch and charging planning system, an average total delivery distance at the second site managed by the second EV dispatch and charging planning system, an average fuel efficiency of an engine vehicle managed by the second EV dispatch and charging planning system, an average available capacity with respect to a contracted power at the second site managed by the second EV dispatch and charging planning system, a renewable energy power ratio at the second site managed by the second EV dispatch and charging planning system, an average value of a total EV charge amount at the second site managed by the second EV dispatch and charging planning system, and a $CO_2$ emission factor of a power plan contracted at the second site managed by the second EV dispatch and charging planning system.

14. A power interchange management method comprising:

a step of planning, by a first EV dispatch and charging planning system that manages a charging device for an electric vehicle and a private power generation device at a first site, charging and dispatch for the electric vehicle;
a step of planning, by a second EV dispatch and charging planning system that manages a charging device for an electric vehicle at a second site, charging and dispatch for the electric vehicle;
a step of aggregating surplus power from the first EV dispatch and charging planning system to obtain interchangeable power by an interchange planning unit; and
a step of providing the interchangeable power to the second EV dispatch and charging planning system according to a predetermined priority order.

[FIG. 1]

POWER INTERCHANGE MANAGEMENT SERVER (2)
INTERCHANGE PLANNING UNIT (21)

LOGISTICS SITE (4a)
EV DISPATCH AND CHARGING PLANNING SYSTEM (42)
PHOTOVOLTAIC POWER GENERATION PANEL (41)
CHARGING DEVICE (43)
EV (44)
ENGINE VEHICLE (45)

LOGISTICS SITE (5a)
EV DISPATCH AND CHARGING PLANNING SYSTEM (46)
CHARGING DEVICE (43)
EV (44)
ENGINE VEHICLE (45)

LOGISTICS SITE (5b)
EV DISPATCH AND CHARGING PLANNING SYSTEM (46)
CHARGING DEVICE (43)
EV (44)
ENGINE VEHICLE (45)

(1) (3)

[FIG. 2A]

42

### EV DISPATCH AND CHARGING PLANNING SYSTEM

421
POWER GENERATION PREDICTION UNIT

422
POWER DEMAND PREDICTION UNIT

423
DISPATCH PLAN CREATION UNIT

424
EV DISPATCH AND CHARGING
PLAN CREATION UNIT

425
SURPLUS POWER NOTIFICATION UNIT

[FIG. 2B]

46

### EV DISPATCH AND CHARGING PLANNING SYSTEM

461
SURPLUS POWER RECEPTION UNIT

462
POWER DEMAND PREDICTION UNIT

463
DISPATCH PLAN CREATION UNIT

464
EV DISPATCH AND CHARGING
PLAN CREATION UNIT

465
SURPLUS POWER NOTIFICATION UNIT

[FIG. 3]

[FIG. 4A]

[FIG. 4B]

[FIG. 4C]

FINAL PURCHASED POWER AMOUNT AND
SURPLUS POWER AMOUNT

kWh

CONTRACTED
POWER

PURCHASED POWER

TIME

SURPLUS POWER

[FIG. 5A]

POWER DEMAND AMOUNT
CHARGE AMOUNT

kWh

■ CHARGING POWER AMOUNT

▨ POWER DEMAND AT SITE

CONTRACTED
POWER

TIME

[FIG. 5B]

kWh

SURPLUS POWER

TIME

[FIG. 5C]

[FIG. 6]

| SITE | AVERAGE AVAILABLE CAPACITY WITH RESPECT TO CONTRACTED POWER [kW] |
|------|-----------------------------------------------------------------|
| SITE a | xxx |
| SITE b | yyy |
| ... | ... |
|  |  |

[FIG. 7]

| SITE | AVERAGE AVAILABLE CAPACITY WITH RESPECT TO CONTRACTED POWER [kW] |
|------|-----------------------------------------------------------------|
| SITE a | xxx |
| SITE b | yyy |
| ... | ... |
|  |  |

[FIG. 8]

| SITE | AVERAGE TOTAL DELIVERY DISTANCE [km/DAY] |
|------|------------------------------------------|
| SITE a | xxx |
| SITE b | yyy |
| ... | ... |
|  |  |

[FIG. 9]

| SITE | ICE AVERAGE FUEL EFFICIENCY [km/L] |
|------|------------------------------------|
| SITE a | xxx |
| SITE b | yyy |
| ... | ... |
|  |  |

[FIG. 10]

| SITE | AVERAGE AVAILABLE CAPACITY WITH RESPECT TO CONTRACTED POWER [kW] |
|---|---|
| SITE a | xxx |
| SITE b | yyy |
| . . . | . . . |
| | |

[FIG. 11]

| SITE | RENEWABLE ENERGY POWER RATIO [%] |
|---|---|
| SITE a | xxx |
| SITE b | yyy |
| . . . | . . . |
| | |

[FIG. 12]

| SITE | AVERAGE TOTAL EV CHARGE AMOUNT PER DAY [kWh/DAY] |
|---|---|
| SITE a | xxx |
| SITE b | yyy |
| . . . | . . . |
|  |  |

## INTERNATIONAL SEARCH REPORT

| | International application No. |
|---|---|
| | **PCT/JP2024/010561** |

**A.    CLASSIFICATION OF SUBJECT MATTER**

*H02J 3/38*(2006.01)i; *H02J 3/00*(2006.01)i; *H02J 7/00*(2006.01)i; *H02J 7/35*(2006.01)i
FI:    H02J3/38 130; H02J3/00 170; H02J7/35 K; H02J7/00 P

According to International Patent Classification (IPC) or to both national classification and IPC

**B.    FIELDS SEARCHED**

Minimum documentation searched (classification system followed by classification symbols)

H02J3/38; H02J3/00; H02J7/00; H02J7/35

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | 中野道樹ほか. 物流拠点間の電力融通を活用したEVトラック充電システムの提案. 電気学会研究会資料. 04 July 2022 (filed date), pp. 13-17, (NAKANO, Michiki et al. Proposal for EV Truck Charging System Utilising Electricity Sharing Between Distribution Centres. Papers of Technical Meeting, I.E.E. Japan.) "1. Introduction", "2. EV Truck Charging System Utilising Self-Wheeling" | 1-4, 14 |
| A | entire text, all drawings | 5-13 |
| Y | JP 2019-165561 A (DAIWA HOUSE INDUSTRY CO., LTD.) 26 September 2019 (2019-09-26) paragraphs [0031]-[0036], [0053]-[0055], [0078]-[0099] | 1-4, 14 |
| A | entire text, all drawings | 5-13 |
| Y | JP 2018-78702 A (TSUJI, Toshihide) 17 May 2018 (2018-05-17) paragraphs [0024]-[0038] | 1-4, 14 |
| A | entire text, all drawings | 5-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/010561**

## C. DOCUMENTS CONSIDERED TO BE RELEVANT

| Category* | Citation of document, with indication, where appropriate, of the relevant passages | Relevant to claim No. |
|---|---|---|
| A | US 2014/0129042 A1 (DORAZLO ENTERPRISES, INC.) 08 May 2014 (2014-05-08) entire text, all drawings | 1-14 |

Form PCT/ISA/210 (second sheet) (July 2022)

## INTERNATIONAL SEARCH REPORT
### Information on patent family members

International application No.

**PCT/JP2024/010561**

| Patent document cited in search report | | | Publication date (day/month/year) | Patent family member(s) | Publication date (day/month/year) |
|---|---|---|---|---|---|
| JP | 2019-165561 | A | 26 September 2019 | (Family: none) | |
| JP | 2018-78702 | A | 17 May 2018 | (Family: none) | |
| US | 2014/0129042 | A1 | 08 May 2014 | (Family: none) | |

Form PCT/ISA/210 (patent family annex) (July 2022)

**REFERENCES CITED IN THE DESCRIPTION**

**Patent documents cited in the description**

- JP 7202928 B